(19) Europäisches Patentamt
European Patent Office
Office européen des brevets

(11) **EP 3 407 603 A1**

(12) **EUROPEAN PATENT APPLICATION**

(43) Date of publication:
**28.11.2018 Bulletin 2018/48**

(51) Int Cl.:
**H04N 19/119** (2014.01) **H04N 19/159** (2014.01)
**H04N 19/176** (2014.01)

(21) Application number: **18162008.9**

(22) Date of filing: **15.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2017 CN 201710384536**

(71) Applicant: **FUJITSU LIMITED**
**Kanagawa 211-8588 (JP)**

(72) Inventors:
• **ZHU, Jianqing**
**Chaoyang District, Beijing 100027 (CN)**
• **YAO, Jie**
**Chaoyang District, Beijing 100027 (CN)**
• **LENG, Jie**
**Chaoyang District, Beijing 100027 (CN)**

(74) Representative: **Haseltine Lake LLP**
**Lincoln House, 5th Floor**
**300 High Holborn**
**London WC1V 7JH (GB)**

(54) **IMAGING CODING METHOD AND APPARATUS, AND IMAGING DECODING METHOD FOR PARTITIONING AN INTRA-CODING UNIT**

(57)   An image coding method and apparatus, as well as an image decoding method and apparatus are provided. The image coding method includes: performing the following processing on each intra-coding unit of an image: determining identification information for identifying a mode, where the mode defines one or more partition schemes, in each of which the intra-coding unit is uniformly partitioned into one or more transform units having a same size, and sizes of the transform units partitioned using different partition schemes are different; partitioning the intra-coding unit into the one or more transform units according to the mode identified by the identification information; and coding the image based on the one or more transform units. With the embodiment of the present disclosure, less bit cost for partition labels of the intra-coding unit is required, image prediction with a higher accuracy acquired, and a high coding efficiency can be achieved.

**400**

Fig. 4

**Description**

**FIELD**

The disclosure relates to the field of video coding and image compression, and in particular to an image coding method and an image coding apparatus, and a corresponding image decoding method and a corresponding image decoding apparatus, which require less bit cost for partition labels of an intra-coding unit, and with which accurate image prediction and high coding efficiency can be achieved.

BACKGROUND

In the video coding standard HEVC, samples are processed by using a coding tree unit (CTU) as the unit. The CTU is partitioned into coding units (CU) by using a quadtree structure. Coding decision is performed on an image using intra image (time) prediction or inter image (space) prediction at the CU level. The CU to which the intra prediction is applied is referred to as an intra CU. Expect for the CU which has a size of 8x8 and can be further partitioned into one or four prediction units (PUs) according to a PU partition type, each intra CU is generally used as one PU. A same prediction processing is applied in one PU, and associated information is transmitted to a decoder based on the PU. After a residual block is acquired by applying the prediction processing based on the PU partition type, the CU can be partitioned into transform units (TUs) according to another quadtree structure similar to the coding tree for the CU.

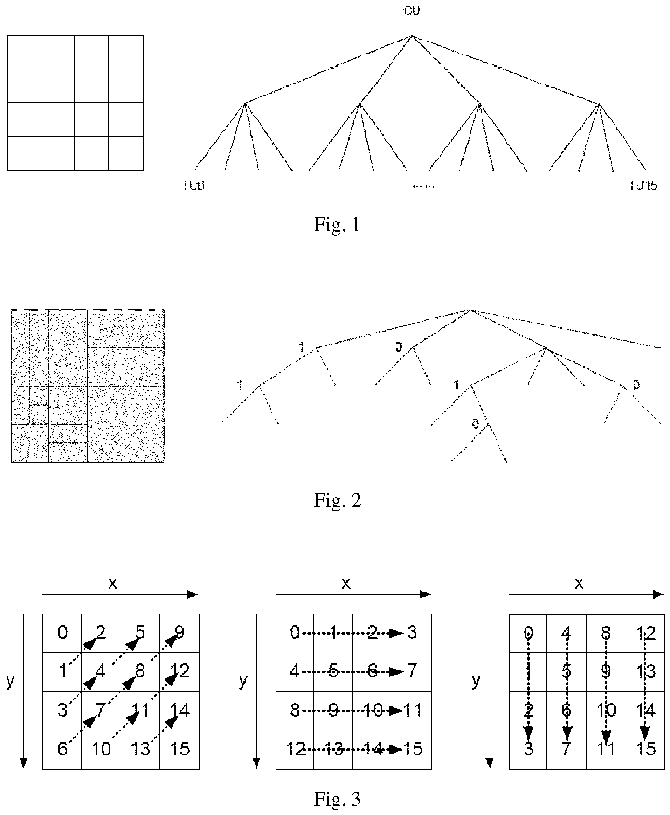

In HEVC, in a case that the TU tree has a great depth, a great number of bits are required for labeling the partition structure. Figure 1 is a diagram showing an example of partitioning of an intra-coding unit in HEVC. The diagram in the left side of Figure 1 shows a partition structure of the intra-coding unit in HEVC which is represented by blocks. The diagram in the right side of Figure 1 shows a partition structure of the intra-coding unit in HEVC which is represented by a tree. For example, as shown in Figure 1, for a CU partitioned into 16 TUs (TU0, ..., TU15), (1+4+16)=21 bits are required for labeling the partition structure. That is, TU partitioning involves great bit cost in HEVC.

During joint development of future video coding of MPGE and ITU, a new structure referred to as a quadtree plus binary tree (QTBT) block structure is introduced. In QTBT, a CTU is partitioned using a quadtree structure, and then leaf nodes of the quadtree are further partitioned using a binary tree structure. Leaf nodes of the binary tree are referred to as CUs, which are used for prediction and transformation without further partition. Therefore, in the QTBT coding block structure, the CU, the PU and the TU have the same block size. Figure 2 is a diagram showing an example of a QTBT structure. The diagram in the left side of Figure 2 is a QTBT structure represented by blocks, and the diagram in the right side of Figure 2 is a QTBT structure represented by a tree. As an example, in Figure 2, quadtree partitioning is represented by solid lines, and binary tree partitioning is represented by dotted lines. In addition, in the binary tree partitioning, flag 1 represents right and left partitioning, and flag 0 represents upper and lower partitioning.

All calculations for the intra CU include prediction as well as residual coding and decoding based on the TU. In QTBT, partition performed on the TU does not involve bit cost for partition labels since the TU equals to the CU. However, if the CU has a great size, the prediction for the CU has lower accuracy as compared with the case where the CU is partitioned into TUs having a smaller size. If the CU has a small size, the bit cost for partition labels of QTBT is increased.

Therefore, for HEVC and QTBT, a tradeoff is required when the intra CU is partitioned into TUs.

In addition, in HEVC, a coding block (CB) may be partitioned into transform blocks (TB). The residual coefficients are coded TB by TB. Before a TB is coded, a two-dimensional residual coefficient array is mapped to a one-dimensional array in a certain scanning order. After the mapping, the one-dimensional array is coded into a bit stream. Generally, there are three scanning orders, which include an up-right 45 degrees scanning order, a horizontal scanning order and a vertical scanning order. Figure 3 shows the three scanning orders performed on a block having a size of 4x4. In Figure 3, the diagram in the left side shows the up-right 45 degrees scanning order represented by scanning order sequence numbers 0, 1, 2, ..., 14, and 15, the diagram in the middle shows the horizontal scanning order represented by scanning order sequence numbers 0, 1, 2, ..., 14, and 15, and the diagram in the right side shows the vertical scanning order represented by scanning order sequence numbers 0, 1,2, ..., 14, and 15. In addition, identification information scanIdx for identifying the scanning order type may be used to specify which scanning order is to be used, where scanIdx=0 may be used for representing the up-right 45 degrees scanning order, scanIdx=1 may be used for representing the horizontal scanning order, and scanIdx=2 may be used for representing the vertical scanning order. There is a derivation process specified for scanIdx in HEVC. Given that a position of an element in the one-dimensional array is sPos (which is a scanning order sequence number shown in the above Figure 3), the x-axis coordination and the y-axis coordination of a position corresponding to the element in a two-dimensional array may be expressed by the following equations:

$$x = ScanOrder[blocksize][sanIdx][sPos][0],$$

and

$$y = ScanOrder[blocksize][sanIdx][sPos][1].$$

In the above equation, ScanOrder represents the scanning order, blocksize represents the block size of the TB, which may be 4x4, 8x8, $16 \times 16$, 32x32, and the like.

Scanning is performed for concentrating energy of the signal. However, since residual coefficients are coded TB by TB in the intra CB, energy is distributed among TBs for the intra CB. Therefore, a new scanning order for the TB is required.

**SUMMARY**

In the following, an overview of the present disclosure is given simply to provide basic understanding to some embodiments of aspects of the present disclosure. It should be understood that this overview is not an exhaustive overview of the present disclosure. It is neither intended to determine a critical part or an important part of the present disclosure, nor to limit the scope of the present disclosure. An object of the overview is only to give some concepts in a simplified manner, which serves as a preface of a more detailed description described later.

In view of the above issue, it is desirable to provide an image coding method and an image coding apparatus, and a corresponding image decoding method and a corresponding image decoding apparatus, which require less bit cost for partition labels of the intra-coding unit, and with which accurate image prediction and a high coding efficiency can be achieved.

According to an embodiment of an aspect of the present disclosure, it is provided an image coding method, which includes: performing the following processing on each intra-coding unit of an image: determining identification information for identifying a mode, where the mode defines one or more partition schemes, in each of which the intra-coding unit is uniformly partitioned into one or more transform units having a same size, and sizes of the transform units partitioned using different partition schemes are different; partitioning the intra-coding unit into the one or more transform units according to the mode identified by the identification information; and coding the image based on the one or more transform units.

According to another embodiment of an aspect of the present disclosure, it is further provided an image coding apparatus for processing each intra-coding unit of an image, which includes: a determination unit configured to determine identification information for identifying a mode, where the mode defines one or more partition schemes, in each of which the intra-coding unit is uniformly partitioned into one or more transform units having a same size, and sizes of the transform units partitioned using different partition schemes are different; a partition unit configured to partition the intra-coding unit into the one or more transform units according to the mode identified by the identification information; and an coding unit configured to code the image based on the one or more transform units.

According to another embodiment of an aspect of the present disclosure, it is further provided an image decoding method, which includes: performing the following processing on each intra-coding unit of an image: extracting, from an coded bit data stream of the image, identification information for identifying a mode, where the mode defines one or more partition schemes, in each of which the intra-coding unit is uniformly partitioned into one or more transform units having a same size, and sizes of the transform units partitioned using different partition schemes are different; recovering the one or more transform units from the coded bit data stream according to the mode identified by the identification information; and performing image decoding based on the one or more transform units.

According to other embodiment of an aspects of the present disclosure, it is further provided computer program codes and a computer program product for implementing the above method according to the present disclosure, and a computer readable storage medium on which the computer program codes for implementing the above method according to the present disclosure are recorded.

Other embodiments of aspects of the embodiments of the disclosure will be presented in the following detailed description serving to fully disclose preferred embodiments of the disclosure but not to limit the disclosure.

**BRIEF DESCRIPTION OF THE DRAWINGS**

The disclosure can be better understood with reference to the detailed description given below in conjunction with the accompanying drawings, throughout which identical or like reference signs denote identical or like components. The accompanying drawings together with the following detailed description are incorporated into and form a part of the specification and serve to further illustrate the preferred embodiments of the disclosure and to explain the principle and advantages of the disclosure by way of example. In the drawings:

Embodiments of the invention are set out, by way of example only, with reference to the following drawings, in which: Figure 1 is a diagram showing an example of partitioning of an intra-coding unit in HEVC;

Figure 2 is a diagram showing an example of a QTBT structure;

Figure 3 is a diagram showing three scanning orders for a block having a size of 4x4;

Figure 4 is a flow chart showing a flow example of an image coding method according to an embodiment of the present disclosure;

Figure 5 is a diagram showing an example of identification information for identifying a mode corresponding to a partition scheme in CU-level protocol data according to an embodiment of the present disclosure;

Figure 6 is a diagram showing an example of a partition scheme of an intra-coding unit having a size of 2Nx2N (N being an integral multiples of 8) according to an embodiment of the present disclosure;

Figure 7 is a diagram showing an example of a partition scheme of an intra-coding unit which is rectangular and has a width of $2^m$ and a length of $2^n$ (m > n) according to an embodiment of the present disclosure;

Figure 8 is a diagram showing an example of a partition scheme of an intra-coding unit which is rectangular and has a width of $2^n$ and a length of $2^m$ (m > n) according to an embodiment of the present disclosure;

Figure 9 is a flow chart showing a coding process performed on an intra-coding unit having a UTU structure according to an embodiment of the present disclosure;

Figure 10 is a diagram showing mapping transform blocks into frequency-domain blocks in a coding block according to an embodiment of the present disclosure;

Figure 11 is a block diagram showing a functional configuration example of an image coding apparatus according to an embodiment of the present disclosure;

Figure 12 is a flow chart showing a flow example of an image decoding method according to an embodiment of the present disclosure;

Figure 13 is a flow chart showing a decoding process performed on an intra-coding unit having a UTU structure according to an embodiment of the present disclosure;

Figure 14 is a block diagram showing a functional configuration example of an image decoding apparatus according to an embodiment of the present disclosure; and

Figure 15 is a block diagram showing an exemplary structure of a personal computer serving as an information processing device which can be adopted in the embodiments of the present disclosure.

## DETAILED DESCRIPTION OF THE EMBODIMENTS

Exemplary embodiments of the present disclosure will be described below in conjunction with the accompanying drawings. For the sake of clarity and conciseness, not all the features of practical implementations are described in the specification. However, it is to be appreciated that numerous implementation-specific decisions shall be made during developing any of such practical implementations so as to achieve the developer's specific goals, for example, to comply with system- and business-related constraining conditions which will vary from one implementation to another. Moreover, it shall also be appreciated that such a development effort might be very complex and time-consuming but may simply be a routine task for those skilled in the art benefiting from this disclosure.

It shall further be noted that only those device structures and/or process steps closely relevant to the solutions of the disclosure are illustrated in the drawings while other details less relevant to the disclosure are omitted so as not to obscure the disclosure due to those unnecessary details.

A uniform TU (UTU) structure is proposed in the present disclosure. According to the UTU structure, an intra CU can be partitioned into several uniform TUs which is rectangular, which indicates that all TUs in the CU have the same size. A part or all of UTU structures can be used in the intra-coding and decoding system. A syntax element in the CU-level syntax may be used for indicating the UTU structures to be used.

In the following, the embodiments of the present disclosure are described in detail in conjunction with the drawings.

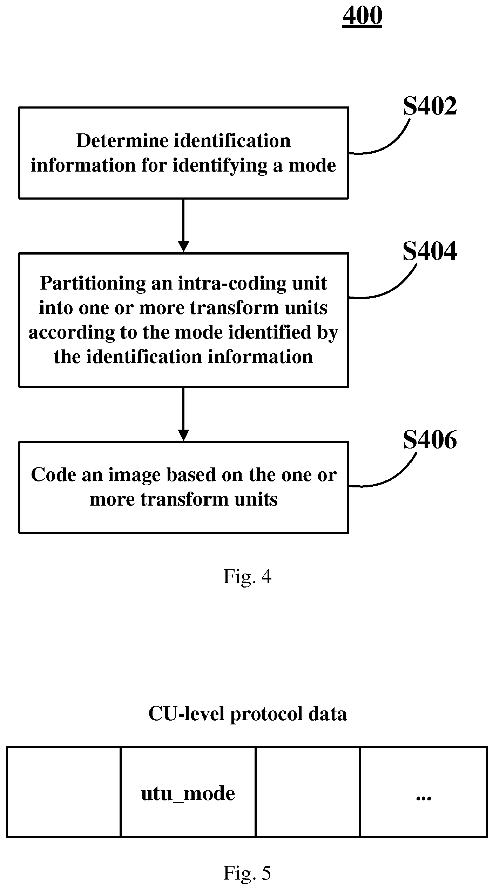

First, a flow example of an imaging coding method 400 according to an embodiment of the present disclosure is described with reference to Figure 4. Figure 4 is a flow chart showing a flow example of an image coding method according to an embodiment of the present disclosure. As shown in Figure 4, the image coding method 400 according to an embodiment of the present disclosure includes a determination step S402, a partition step S404 and a coding step S406 to be performed on each intra-coding unit of the image.

In the determination step S402, identification information for identifying a mode may be determined. The mode defines one or more partition schemes, in each of which the intra-coding unit may be uniformly partitioned into one or more transform units having a same size, and sizes of the transform units partitioned using different partition schemes are different.

As a specific example, in the UTU structure, one or more partition schemes corresponding to different modes may be pre-determined for the intra-coding unit. In each partition scheme, the intra-coding unit can be uniformly partitioned into transform units having a same size, and sizes of the transform units partitioned using different partition schemes are different.

In CU-level protocol data, identification information utu_mode which is a syntax element may be used for identifying the mode. Figure 5 is a diagram showing an example of identification information utu_mode for identifying a mode corresponding to a partition scheme in CU-level protocol data according to an embodiment of the present disclosure. As shown in Figure 5, for the UTU structure, the identification information utu_mode may be used for identifying modes corresponding to different partition schemes. As a specific example, in a case where intra_mode is identification information for identifying an intra prediction mode, the identification information utu_mode may be located after intra_mode and before coding data of a CU in the CU-level protocol data. In the intra-coding and decoding system, a part or all of UTU structures may be used. For a CU to be partitioned, the number of coding bits of the CU under each partition scheme is pre-calculated, and the partition scheme corresponding to the minimum number of coding bits is selected as the partition scheme for this CU, thereby determining the identification information utu_mode for identifying the mode. Given that a total of p partition schemes are used, $\log_2(p)$ bits are used for indicating the identification information utu_mode in the CU-level protocol data. Any entropy coding method can be used for coding utu_mode. In the following, the partition scheme and utu_mode are described for intra-coding units having different sizes.

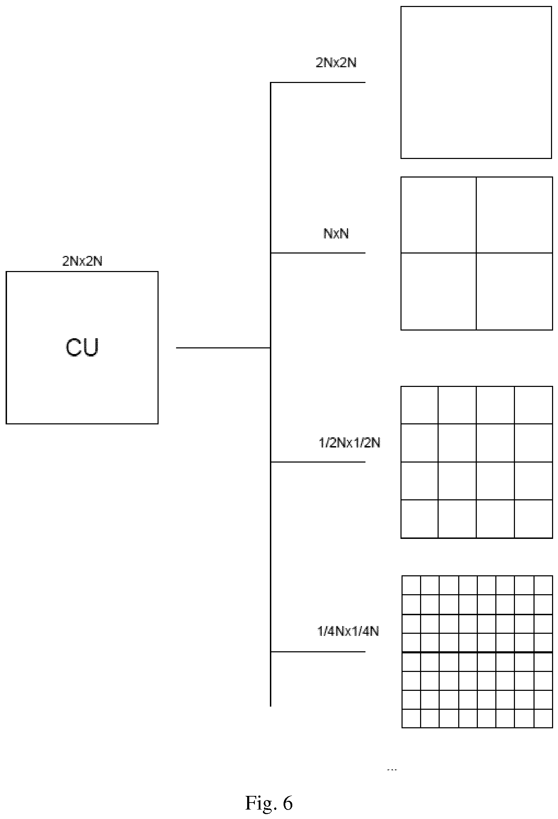

Preferably, for an intra-coding unit having a size of 2Nx2N, with N being integral multiples of 8, the one or more partition schemes may include the following scheme 1 and/or scheme 2. According to the scheme 1, the intra-coding unit is directly used as the transform unit. According to the scheme 2, each transform unit has a square shape and a size greater than or equal to 4x4. Figure 6 is a diagram showing an example of a partition scheme of an intra-coding unit having a size of 2Nx2N (N being an integral multiples of 8) according to an embodiment of the present disclosure. The block diagram in the left side of Figure 6 is a CU having a size of 2Nx2N. In the right side of Figure 6, block diagrams from top to bottom represent the CU having the size of 2Nx2N being uniformly partitioned into different numbers of transform units. For the intra-coding unit having the size of 2Nx2N (with N being integral multiples of 8), the size of the TU may be 2Nx2N (that is, the CU is not partitioned), as shown by the block diagram in the first row in the right side of Figure 6; the size of the TU may be NxN (the CU is partitioned into 4 TUs), as shown by the block diagram in the second row in the right side of Figure 6; the size of the TU may be $1/2N \times 1/2N$ (the CU is partitioned into 16 TUs), as shown by the block diagram in the third row in the right side of Figure 6; the size of the TU may be $1/4N \times 1/4N$ (the CU is partitioned into 64 TUs), as shown by the block diagram in the fourth row in the right side of Figure 6; until the CU is partitioned into the minimum allowable TU size (in HEVC, the minimum allowable TU size is 4x4).

As described above, a part or all of UTU structures can be used in the intra-coding and decoding system. The syntax element utu_mode in CU-level syntax data may be used for indicating which partition mode is to be used. As a specific example, for the intra-coding unit having the size of 2Nx2N, it is assumed that the following 4 partition scheme is pre-determined: a mode 0 indicates that the CU is not partitioned, a mode 1 indicates that the CU is partitioned into 4 TUs having a size of NxN, a mode 2 indicates that the CU is partitioned into 16 TUs having a size of $1/2N \times 1/2N$, and a mode 3 indicates that the CU is partitioned into 64 TUs having a size of $1/4N \times 1/4N$. For the above 4 partition schemes, utu_mode="00" may be used for indicating the mode 0, utu_mode="01" may be used for indicating the mode 1, utu_mode="10" may be used for indicating the mode 2, and utu_mode="11" may be used for indicating the mode 3. That is, utu_mode requiring only 2 bits can indicate the above 4 partition scheme. However, as shown in Figure 1, in HEVC, 21 bits are required for indicating the partition scheme where the CU is to be partitioned into 16 TUs.

Preferably, for an intra-coding unit which has a size of 8x8 and is not to be partitioned into prediction units, the one or more partition schemes may include the following scheme 1 and/or scheme 2. According to the scheme 1, the intra-coding unit is directly used as the transform unit. According to the scheme 2, each transform unit has a size equal to 4x4.

As a specific example, for an intra-coding unit which has a size of 8x8 and is not to be partitioned into prediction units, the partition scheme may include at least one of: the intra-coding unit being directly used as the transform unit, and each transform unit has a size equal to 4x4.

Preferably, for an intra-coding unit which has a size of 8x8 and is to be partitioned into 4 prediction units having a size of 4x4, the one or more partition schemes includes a scheme 1, according to which each transform unit has a size equal to 4x4.

As a specific example, for an intra-coding unit which has a size of 8x8 and is to be partitioned into 4 prediction units having a size of 4x4, the partition scheme may be each transform unit having a size equal to 4x4.

Preferably, for an intra-coding unit which is rectangular and has a width of $2^m$ and a length of $2^n$, m>n, the one or more partition schemes may include the following scheme 1 and/or scheme 2. According to the scheme 1, the intra-coding unit is directly used as the transform unit. According to the scheme 2, each transform unit has a square shape and a size greater than or equal to 4x4.

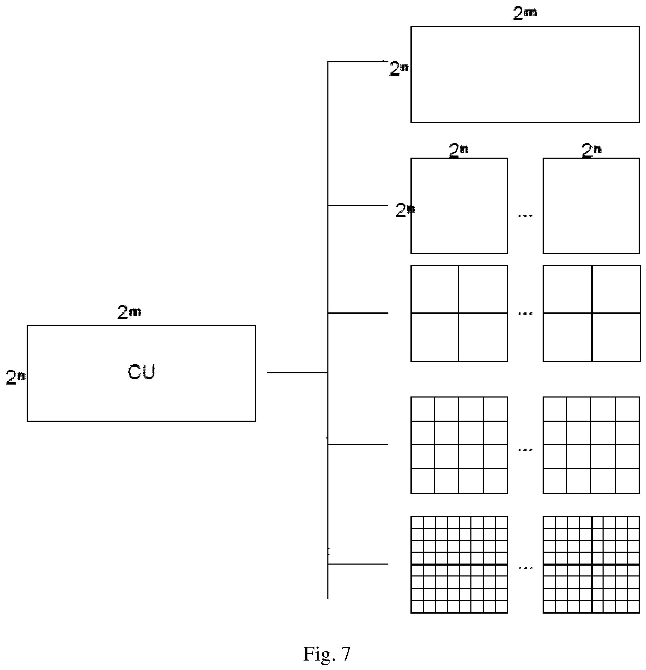

Figure 7 is a diagram showing an example of a partition scheme of an intra-coding unit which is rectangular and has a width of $2^m$ and a length of $2^n$ (m > n) according to an embodiment of the present disclosure.

The block diagram in the left side of Figure 7 is a CU having a width of $2^m$ and a length of $2^n$. In the right side of Figure 7, block diagrams from top to bottom represent the CU having a width of $2^m$ and a length of $2^n$ being uniformly partitioned into different numbers of transform units. For the intra-coding unit having a width of $2^m$ and a length of $2^n$, the size of the TU may be $2^m \times 2^n$ (that is, the CU is not partitioned), an shown by the block diagram in the first row in the right side of Figure 7; the size of the TU may be $2^n \times 2^n$ (the CU is partitioned into $2^m$ TUs having a size of $2^n \times 2^n$), as shown by the block diagram in the second row in the right side of Figure 7; the size of the TU may be $2^{n-1} \times 2^{n-1}$ (the CU is partitioned into $2^{m-n+2}$ TUs having a size of $2^{n-1} \times 2^{n-1}$), as shown by the block diagram in the third row in the right side of Figure 7; the size of the TU may be $2^{n-2} \times 2^{n-2}$ (the CU is partitioned into $2^{m-n+4}$ TUs having a size of $2^{n-2} \times 2^{n-2}$), as shown by the block diagram in the fourth row in the right side of Figure 7; the size of the TU may be $2^{n-3} \times 2^{n-3}$ (the CU is partitioned into $2^{m-n+6}$ TUs having a size of $2^{n-3} \times 2^{n-3}$), as shown by the block diagram in the fifth row on the right side of Figure 7; until the CU is partitioned into the minimum allowable TU size (in HEVC, the minimum allowable TU size is 4x4).

As a specific example, given that a total of p partition schemes are used for the intra-coding unit which is rectangular and has a width of $2^m$ and a length of $2^n$ (m > n), log2(p) bits are required for indicating the identification information utu_mode for identifying the mode in the CU-level protocol data.

Preferably, for an intra-coding unit which is rectangular and has a width of $2^n$ and a length of $2^m$, m > n, the one or more partition schemes includes the following scheme 1 and/or scheme 2. According to the scheme 1, the intra-coding unit is directly used as the transform unit. According to the scheme 2, each transform unit has a square shape and a size greater than or equal to 4x4.

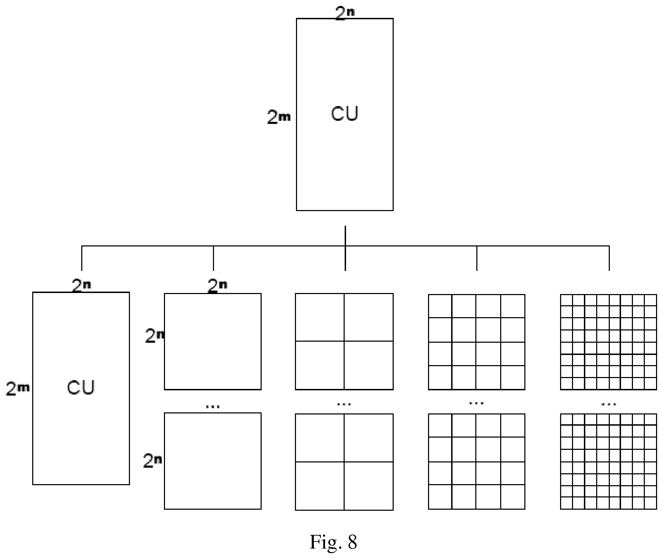

Figure 8 is a diagram showing an example of a partition scheme of an intra-coding unit which is rectangular and has a width of $2^n$ and a length of $2^m$ (m > n) according to an embodiment of the present disclosure. The block diagram in the most upper portion of Figure 8 is a CU having a width of $2^n$ and a length of $2^m$. In the lower portion of Figure 8, block diagrams from left to right represent the CU having a width of $2^n$ and a length of $2^m$ being uniformly partitioned into different numbers of transform units. For the intra-coding unit having a width of $2^n$ and a length of $2^m$, the size of the TU may be $2^n \times 2^m$ (that is, the CU is not partitioned), as shown by the block diagram in the first column in the lower portion of Figure 8; the size of the TU may be $2^n \times 2^n$ (the CU is partitioned into $2^{m-n}$ TUs having a size of $2^n \times 2^n$), as shown by the block diagram in the second column in the lower portion of Figure 8; the size of the TU may be $2^{n-1} \times 2^{n-1}$ (the CU is partitioned into $2^{m-n+2}$ TUs having a size of $2^{n-1} \times 2^{n-1}$), as shown by the block diagram in the third column in the lower portion of Figure 8; the size of the TU may be $2^{n-2} \times 2^{n-2}$ (the CU is partitioned into $2^{m-n+4}$ TUs having

a size of $2^{n-2} \times 2^{n-2}$), as shown by the block diagram in the fourth column in the lower portion of Figure 8; the size of the TU may be $2^{n-3} \times 2^{n-3}$ (the CU is partitioned into $2^{m-n+6}$ TUs having a size of $2^{n-3} \times 2^{n-3}$), as shown by the block diagram in the fifth column in the lower portion of Figure 8; until the CU is partitioned into the minimum allowable TU size (in HEVC, the minimum allowable TU size is 4x4).

As a specific example, given that a total of p partition schemes are used for the intra-coding unit which is rectangular and has a width of $2^n$ and a length of $2^m$ (m > n), log2(p) bits are required for indicating the identification information utu_mode for identifying the mode in the CU-level protocol data.

Preferably, a luminance component and chrominance components of the image share the one or more partition schemes, or the luminance component and the chrominance components of the image use different ones of the one or more partition schemes.

As a specific example, in a case where identification information utu_mode for identifying the mode corresponding to the partition scheme is determined for the luminance component of the CU (that is, the UTU structure is determined), the chrominance components of the CU may share the UTU structure with the luminance component, or may use a separate UTU structure.

In a partition step S404, the intra-coding unit is partitioned into the one or more transform units according to the mode identified by the identification information.

As a specific example, after the identification information utu_mode for identifying the mode is determined, the intra-coding unit is partitioned into uniform transform units according to the partition scheme corresponding to the mode identified by the identification information utu_mode.

In a coding step S406, the image is coded based on the one or more transform units.

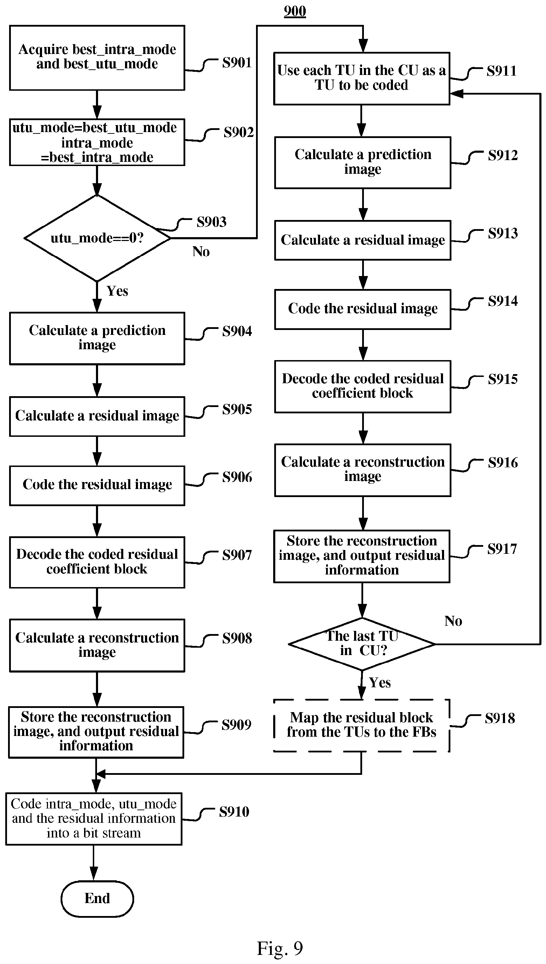

Figure 9 is a flow chart showing a coding process performed on an intra-coding unit having a UTU structure according to an embodiment of the present disclosure.

In step S901, the intra prediction mode is determined and all conditions of utu_mode are traversed to acquire the optimal intra prediction mode best_intra_mode and the optimal UTU mode best_utu_mode. Typical intra prediction modes include a DC (direct current) mode, a horizontal prediction mode, a vertical prediction mode, and other directional prediction modes. In step S901, the above intra prediction modes are traversed, thereby acquiring the optimal intra prediction mode best_intra_mode according to a predetermined rule. In addition, all conditions of utu_mode are traversed for the CU to be coded, to acquire the utu_mode with the lowest code rate as best_utu_mode.

In step S902, set utu_mode=best_utu_mode, and set intra_mode=best_intra_mode, where intra_mode is identification information for identifying the intra prediction mode.

In step S903, it is determined whether utu_mode equals to 0. If utu_mode equals to 0, it is determined that the CU to be coded is not partitioned, and the process proceeds to step S904.

In step S904, a prediction image is calculated. That is, the prediction image of the CU to be coded is calculated using intra_mode determined in step S902.

In step S905, a residual image is calculated. That is, the residual image of the CU to be coded is calculated by subtracting the prediction image acquired by calculation in step S904 from an original image of the CU to be coded.

In step S906, the residual image is coded. That is, transformation, quantization and the like are performed on the residual image acquired by calculation in step S905 for coding the residual image, thereby acquiring a coded residual coefficient block.

In step S907, the coded residual coefficient block is decoded. That is, inverse quantization, inverse transformation and the like are performed on the coded residual coefficient block acquired in step S906 for decoding the coded residual coefficient block, thereby acquiring a decoded residual image.

In step S908, a reconstruction image is calculated. That is, the reconstruction image of the CU is calculated based on the prediction image acquired by calculation in step S904 and the residual image decoded in step S907.

In step S909, the reconstruction image is stored, and residual information is outputted. That is, the reconstruction image of the CU acquired by calculation in step S908 is stored for coding a next CU, and the residual information of the residual image of the present CU is outputted.

In step S910, intra_mode, utu_mode and the residual information are coded into a bit stream. That is, intra_mode and utu_mode acquired in step S902 and the residual information from step S909 are coded into a bit stream.

If it is determined in step S903 that utu_mode is not equal to 0, that is, it is determined that the CU to be coded is partitioned into TUs, the process proceeds to step S911.

In step S911, each of TUs of the CU is used as a TU to be coded, on which the processing from steps S912 to 917 is performed.

In step S912, a prediction image is calculated. That is, the prediction image of the TU to be coded is calculated using intra_mode determined in step S902.

In step S913, a residual image is calculated. That is, the residual image of the TU to be coded is calculated by subtracting the prediction image acquired by calculation in step S912 from an original image of the TU to be coded.

In step S914, the residual image is coded. That is, transformation, quantization and the like are performed on the residual image acquired by calculation in step S913 for coding the residual image, thereby acquiring a coded residual coefficient block.

In step S915, the coded residual coefficient block is decoded. That is, inverse quantization, inverse transformation and the like are performed on the coded residual coefficient block acquired in step S914 for decoding the coded residual coefficient block, thereby acquiring a decoded residual image.

In step S916, a reconstruction image is calculated. That is, the reconstruction image of the TU is calculated based on the prediction image acquired by calculation in step S912 and the residual image decoded in step S915.

In step S917, the reconstruction image is stored, and residual information is outputted. That is, the reconstruction image of the TU acquired by calculation in step S916 is stored, and the residual information of the residual image of the TU is outputted.

After the processing from steps S912 to S917 is performed on all TUs of the CU, the process proceeds to step S918. In step S918, the residual block is mapped from the TU to a frequency-domain block (FB). Step S918 is not essential. For an image with certain features, such as an image in which the number of TBs of which coded residual coefficient blocks are all zero is great, it is unnecessary to perform step S918. Whether to perform step S918 is controlled by providing a switch flag in a CU level or a higher level syntax element. Then in step S910, intra_mode, utu_mode and the residual information are coded into a bit stream. That is, intra_mode and utu_mode acquired in step S902 and the residual information from step S918 are coded into a bit stream. After all CUs are coded, the process ends.

For a color image, one CU includes 3 CBs, which include 1 CB of the luminance component and 2 CBs of the chrominance component. For convenience of description, it is assumed in the following that one CU is equivalent to one CB for description. Similarly, it is assumed that one TU is equivalent to one TB for description.

In step S918, when the image is coded, residual coefficients are coded TB by TB in the CB. Therefore, for the CB, energy is distributed among TBs. As described above, a method of mapping the TBs in the UTU structure to frequency-domain blocks thereby changing the scanning order of the TBs, in order to concentrate the energy of the signal, is provided according to the present disclosure.

Specifically, a method for coding a first coding block is provided. The first coding block includes multiple transform blocks having a same size, each of which includes multiple elements respectively corresponding to multiple frequency components. The method includes: generating a frequency-domain block corresponding to a specific frequency component using elements corresponding to the specific frequency component in the multiple transform blocks; for the multiple frequency components, generating multiple frequency-domain blocks respectively corresponding to the multiple frequency components; and generating a second coding block using the multiple frequency-domain blocks, where the multiple frequency-domain blocks in the second coding block are arranged such that the frequency-domain block corresponding to a lower frequency component is scanned prior to the frequency-domain block corresponding to a higher frequency component.

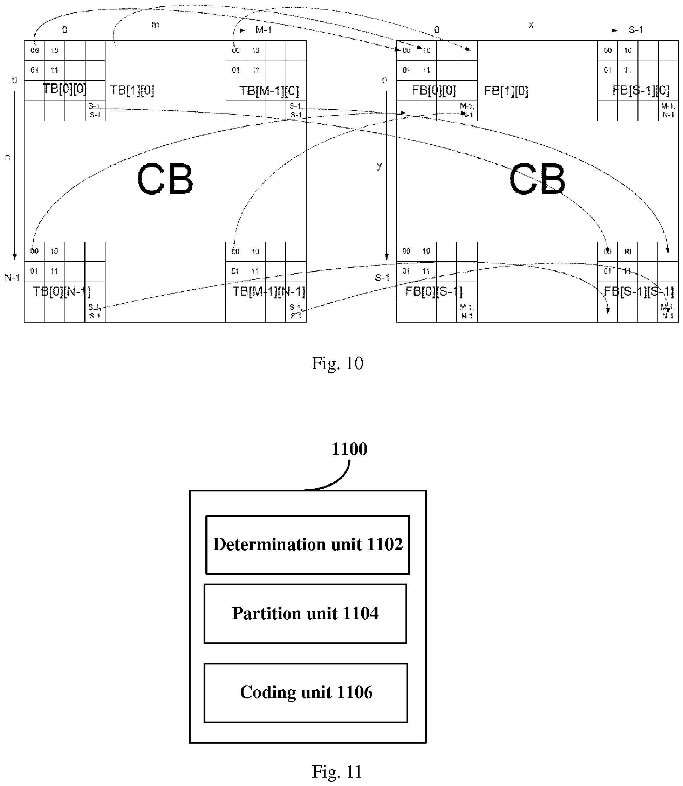

Figure 10 is a diagram showing mapping transform blocks in a coding block into frequency-domain blocks according to an embodiment of the present disclosure. As a specific example, the first coding block may be a CB having a UTU structure shown in the left side of Figure 10. The CB in the left side of Figure 10 consists of TBs arranged in M columns by N rows. That is, the CB consists of TB[0][0], TB[1][0], ..., TB[M-1][0], ..., TB[0][N-1], ..., and TB[M-1][N-1]. Each TB has a size of SxS. Let TB[m][n][x][y] represents a coefficient in an x-th column and a y-th row in a TB in an m-th column and a n-th row, where m=0,..., M-1; n=0,..., N-1; x=0,..., S-1; and y=0,..., S-1. In the CB in the left side of Figure 10, elements at a same position of the multiple TBs correspond to the same frequency component. For example, the elements at the position where x=0 and y=0 in TB[0][0], TB[1][0], ..., TB[M-1][0], ..., TB[0][N-1], ..., and TB[M-1][N-1] correspond to the same lowest frequency component, and the elements at the position where x=S-1 and y=S-1 in TB[0][0], TB[1][0], ..., TB[M-1][0], ..., TB[0][N-1], ..., and TB[M-1][N-1] correspond to the same highest frequency component. In a same TB, elements at different positions correspond to different frequency components. Taking TB[0][0] as an example, elements at different positions in TB[0][0] correspond to different frequency components. That is, each TB includes multiple elements respectively corresponding to multiple frequency components.

As a specific example, the second coding block may be a CB consisting of multiple FBs shown in the right side of Figure 10. A frequency-domain block corresponding to a specific frequency component may be generated using elements corresponding to the specific frequency component in the multiple transform blocks. As shown in Figure 10, the elements at the position where x=0 and y=0 (the elements corresponding to the lowest frequency component) in TB[0][0], TB[1][0], ..., TB[M-1][0], ..., TB[0][N-1], ..., and TB[M-1][N-1] may be used to generate the frequency-domain block FB[0][0] corresponding to the lowest frequency component, and the elements at the position where x=S-1 and y=S-1 (the elements corresponding to the highest frequency component) in TB[0][0], TB[1][0], ..., TB[M-1][0], ..., TB[0][N-1], ..., and TB[M-1][N-1] may be used to generate the frequency-domain block FB[S-1][S-1] corresponding to the highest frequency component. In this way, for multiple frequency components, frequency-domain blocks FB[0][0], FB[1][0], ..., FB[S-1][0], ..., FB[0][S-1], ..., and FB[S-1][S-1] respectively corresponding to different frequency components can be generated. Let FB[x][y][m][n] represents a coefficient in an m-th column and a n-th row in a FB in an x-th column and a y-th row, the mapping from the TBs to the FBs may be expressed as FB[x][y][m][n]= TB[m][n][x][y]. In this way, the CB consisting of multiple FBs shown in the right side of Figure 10 may be generated. In the CB consisting of multiple FBs, when the multiple FBs are scanned, the frequency-domain block FB[0][0] is first scanned since the frequency-domain block FB[0][0] corresponds to the lowest frequency component, and the frequency-domain block FB[S-1][S-1] is last scanned since the frequency-domain block FB[S-1][S-1] corresponds to the highest frequency component. That is, the multiple frequency-domain blocks may be arranged such that the frequency-domain block corresponding to a lower frequency component is scanned prior to the frequency-domain block corresponding to a higher frequency component.

Preferably, the position of each element in the frequency-domain block corresponds to the position of the transform block containing the element in the first coding block. As a specific example, as shown in Figure 10, where the frequency-domain block FB[0][0] is taken as an example, as described above, the frequency-domain block FB[0][0] is generated using the elements at the position where x=0 and y=0 in TB[0][0], TB[1][0], ..., TB[M-1][0], ..., TB[0][N-1], ..., and TB[M-1][N-1]. More specifically, since TB[0][0] is located at a position where m=0 and n=0 in the first coding block, the element at the position where x=0 and y=0 in TB[0][0] is located at the position where m=0 and n=0 in FB[0][0]; since TB[1][0] is located at a position where m=1 and n=0 in the first coding block, the element at the position where x=0 and y=0 in TB[1][0] is located at the position where m=1 and n=0 in FB[0][0]; since TB[M-1][0] is located at a position where m=M-1 and n=0 in the first coding block, the element at the position where x=0 and y=0 in TB[M-1][0] is located at the position where m=M-1 and n=0 in FB[0][0]; since TB[0][N-1] is located at a position where m=0 and n=N-1 in the first coding block, the element at the position where x=0 and y=0 in TB[0][N-1] is located at the position where m=0 and n=N-1 in FB[0][0]; and since TB[M-1][N-1] is located at a position where m=M-1 and n=N-1 in the first coding block, the element at the position where x=0 and y=0 in TB[M-1][N-1] is located at the position where m=M-1 and n=N-1 in FB[0][0].

Preferably, a position of the frequency-domain block corresponding to a specific frequency component in the second coding block corresponds to a position of an element corresponding to the specific frequency component in a corresponding transform block. As a specific example, as shown in Figure 10, since FB[0][0] corresponds to the element at the position where x=0 and y=0 in each transform block, FB[0][0] is located at a position where x=0 and y=0 in the CU shown in the right side of Figure 10; since FB[1][0] corresponds to the element at the position where x=1 and y=0 in each transform block, FB[1][0] is located at a position where x=1 and y=0 in the CU shown in the right side of Figure 10; since FB[S-1][0] corresponds to the element at the position where x=S-1 and y=0 in each transform block, FB[S-1][0] is located at a position where x=S-1 and y=0 in the CU shown in the right side of Figure 10; since FB[0][S-1] corresponds to the element at the position where x=0 and y=S-1 in each transform block, FB[0][S-1] is located at a position where x=0 and y=S-1 in the CU shown in the right side of Figure 10; and since FB[S-1][S-1] corresponds to the element at the position where x=S-1 and y=S-1 in each transform block, FB[S-1][S-1] is located at a position where x=S-1 and y=S-1 in the CU shown in the right side of Figure 10.

Preferably, elements in multiple frequency-domain blocks in the second coding block are extracted in a pre-determined scanning order to form a data stream, and successive elements of which values are zero at the end of the data stream are removed. As a specific example, the CB consisting of multiple FBs shown in the right side of Figure 10 is coded by being scanned FB by FB. The scanning order for the FB is specified using identification information scanIdx for identifying the scanning order. There are two methods for determining scanIdx. The first method is similar to that in the HEVC standard, where scanIdx is derived according to the intra prediction mode. According to the second method, a syntax element scanIdx is added in the CU-level protocol data for explicitly indicating the scanning order. In the second method, scanning orders are traversed to acquire the scanning order with the lowest code rate, and the identification information scanIdx for identifying the scanning order with the lowest code rate is added to the CU-level protocol data and is coded into the code stream. Since the FB corresponding to a higher frequency component includes more elements of which values are zero, and as described above, the FB corresponding to a lower frequency component is scanned prior to the FB corresponding to a higher frequency component, a number of successive elements of which values are zero may exist at the end of the data code stream acquired by scanning in the above scanning order, and the successive elements of which values are zero at the end of the data code stream may be removed in order to reduce the code rate.

Preferably, in a case that multiple elements in each transform block in the first coding block is scanned in a certain order, multiple frequency-domain blocks in the second coding block are scanned in the certain order. As a specific example, in the CB consisting of multiple TBs shown in the left side of Figure 10, if elements in each TB are scanned in a certain order, multiple FBs in the CB consisting of the multiple FBs shown in the right side of Figure 10 are scanned in the certain order.

Preferably, the certain scanning order includes at least one of a horizontal scanning order, a vertical scanning order, and an up-right 45 degrees scanning order. As described above, the scanning order may be specified using scanIdx. For example, scanIdx=0 specifies the up-right 45 degrees scanning order, scanIdx=1 specifies the horizontal scanning order, and scanIdx=2 specifies the vertical scanning order. Taking scanIdx=0, that is, the scanning order being the up-right 45 degrees scanning order as an example, and assuming that the CU includes FBs arranged in 4 columns by 4 rows, the FBs are scanned in the order listed: FB[0][0], FB[0][1], FB[1][0], FB[0][2], FB[1][1], FB[2][0],..., and FB[3][3]. Residual coefficients in one FB may be scanned in any order. The two-dimensional array of the CB consisting of multiple FBs shown in the right side of Figure 10 may be transformed into a one-dimensional array by scanning.

Finally, the prediction mode intra_mode, utu_mode, scanIdx (if present) and the one-dimensional coefficient array are coded into a coded bit stream using an existing coding method in the HEVC or other coding method.

In summary, as compared with the transform unit partition method in the HEVC, the image coding method 400 according to the embodiments of the present disclosure requires less bit cost for partition labels. As compared with the partition method which does not involve the transform unit in the QTBT, image prediction with higher accuracy can be acquired. By using the mapping from the transform blocks to the frequency-domain blocks, energy is more concentrate for the entire CU, thus a high coding efficiency can be achieved.

Corresponding to the above embodiment of the image coding method, the following embodiment of an image coding apparatus is further provided according to the present disclosure.

Figure 11 is a block diagram showing a functional configuration example of an image coding apparatus 1100 according to an embodiment of the present disclosure.

As shown in Figure 11, the image coding apparatus 1100 according to an embodiment of the present disclosure processes each intra-coding unit of the image. The image coding apparatus 1100 may include a determination unit 1102, a partition unit 1104 and a coding unit 1106. In the following, functional configuration examples of respective units are described.

The determination unit 1102 is configured to determine identification information for identifying a mode. The mode defines one or more partition schemes, in each of which the intra-coding unit is uniformly partitioned into one or more transform units having a same size, and sizes of the transform units partitioned using different partition schemes are different.

As described in the above method embodiment, in the UTU structure, one or more partition schemes corresponding to different modes may be pre-determined for the intra-coding unit. In each partition scheme, the intra-coding unit can be uniformly partitioned into transform units having a same size, and sizes of the transform units partitioned using different partition schemes are different.

In CU-level protocol data, identification information utu_mode which is a syntax element may be used for identifying the mode. One can refer to the description in corresponding positions in the above method embodiment for the specific example of the identification information utu_mode, which is not repeated herein.

Preferably, for an intra-coding unit having a size of 2Nx2N, with N being integral multiples of 8, the one or more partition schemes may include the following scheme 1 and/or scheme 2. According to the scheme 1, the intra-coding unit is directly used as the transform unit. According to the scheme 2, each transform unit is in a square shape and have a size greater than or equal to 4x4. One can refer to the description in corresponding positions in the above method embodiment for the specific example of the partition scheme of the intra-coding unit having a size of 2Nx2N, which is not repeated herein.

Preferably, for an intra-coding unit which has a size of 8x8 and is not to be partitioned into prediction units, the one or more partition schemes may include the following scheme 1 and/or scheme 2. According to the scheme 1, the intra-coding unit is directly used as the transform unit. According to the scheme 2, each transform unit has a size equal to 4x4. One can refer to the description in corresponding positions in the above method embodiment for the specific example of the partition scheme of the intra-coding unit which has a size of 8x8 and is not to be partitioned into prediction units, which is not repeated herein.

Preferably, for an intra-coding unit which has a size of 8x8 and is to be partitioned into 4 prediction units having a size of 4x4, the one or more partition schemes includes a scheme 1, according to which each transform unit has a size equal to 4x4. One can refer to the description in corresponding positions in the above method embodiment for the specific example of the partition scheme of the intra-coding unit which has a size of 8x8 and is to be partitioned into 4 prediction units having a size of 4x4, which is not repeated herein.

Preferably, for an intra-coding unit which is rectangular and has a width of $2^m$ and a length of $2^n$, m>n, the one or more partition schemes may include the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above method embodiment for the specific example of the partition scheme of the intra-coding unit which is rectangular and has a width of $2^m$ and a length of $2^n$, which is not repeated herein.

Preferably, for an intra-coding unit which is rectangular and has a width of $2^n$ and a length of $2^m$, m > n, the one or more partition schemes includes the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above method embodiment for the specific example of the partition scheme of the intra-coding unit which is rectangular and has a width of $2^n$ and a length of $2^m$, which is not repeated herein.

Preferably, a luminance component and chrominance components of the image share the one or more partition schemes, or the luminance component and the chrominance components of the image use different ones of the one or more partition schemes. As a specific example, in a case where the identification information utu_mode for identifying the mode corresponding to the partition scheme is determined for the luminance component of the CU (that is, the UTU structure is determined), the chrominance components of the CU may share the UTU structure with the luminance component, or may use a separate UTU structure.

The partition unit 1104 is configured to partition the intra-coding unit into the one or more transform units according to the mode identified by the identification information.

As a specific example, after the identification information utu_mode for identifying the mode is determined, the intra-coding unit is partitioned into uniform transform units according to the partition scheme corresponding to the mode identified by the identification information utu_mode.

The coding unit 1106 is configured to code the image based on the one or more transform units.

One can refer to the description in corresponding positions in the above method embodiment for the specific flow example of the coding process performed on the intra-coding unit having the UTU structure, which is not repeated herein.

When the image is coded, residual coefficients are coded TB by TB in the CB. Therefore, for the CB, energy is distributed among TBs. An apparatus capable of mapping the TBs in the UTU structure to frequency-domain blocks thereby changing the scanning order of the TBs, in order to concentrate the energy of the signal, is provided according to the present disclosure.

Specifically, an apparatus for coding a first coding block is provided. The first coding block includes multiple transform blocks having a same size, each of which includes multiple elements respectively corresponding to multiple frequency components. The apparatus includes: a frequency-domain block generation unit configured to generate a frequency-domain block corresponding to a specific frequency component using elements corresponding to the specific frequency component in the multiple transform blocks, and for the multiple frequency components, generate multiple frequency-domain blocks respectively corresponding to the multiple frequency components; and a second coding block generation unit configured to generate a second coding block using the multiple frequency-domain blocks, where the second coding block generation unit is configured such that the multiple frequency-domain blocks in the second coding block are arranged such that the frequency-domain block corresponding to a lower frequency component is scanned prior to the frequency-domain block corresponding to a higher frequency component.

Preferably, the position of each element in the frequency-domain block corresponds to the position of the transform block containing the element in the first coding block.

Preferably, a position of the frequency-domain block corresponding to the specific frequency component in the second coding block corresponds to a position of an element corresponding to the specific frequency component in a corresponding transform block.

Preferably, elements in multiple frequency-domain blocks in the second coding block are extracted in a pre-determined scanning order to form a data stream, and successive elements of which values are zero at the end of the data stream are removed.

Preferably, in a case that multiple elements in each transform block in the first coding block is scanned in a certain order, multiple frequency-domain blocks in the second coding block are scanned in the certain order.

Preferably, the certain scanning order includes at least one of a horizontal scanning order, a vertical scanning order, and an up-right 45 degrees scanning order.

One can refer to the description in corresponding positions in the above method embodiment for the specific example of the mapping the transform blocks in the coding block into the frequency-domain blocks, which is not repeated herein.

In summary, as compared with the transform unit partition in the HEVC, the image coding apparatus 1100 according to the embodiments of the present disclosure requires less bit cost for partition labels. As compared with the partition which does not involve the transform unit in the QTBT, image prediction with a higher accuracy can be achieved. By using the mapping from the transform blocks to the frequency-domain blocks, energy is more concentrate for the entire CU, thus a high code rate can be achieved.

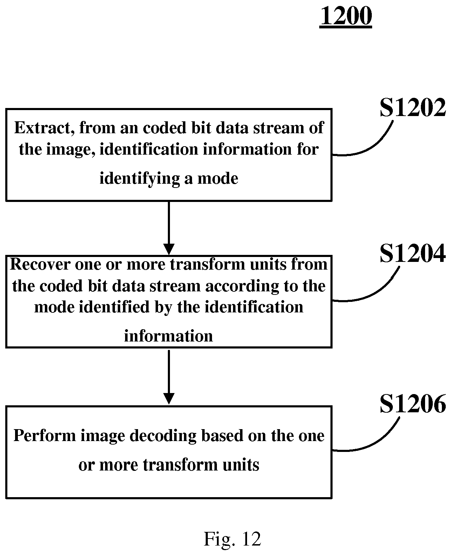

In addition, an image decoding method is further provided according to the embodiment of the present disclosure. A flow example of the image decoding method 1200 according to the embodiment of the present disclosure is described with reference to Figure 12, which is a flow chart showing a flow example of an image decoding method according to an embodiment of the present disclosure. As shown in Figure 12, the image decoding method 1200 according to the embodiment of the present disclosure includes a extraction step S1202, a recovery step S1204 and a decoding step S1206 to be performed on each intra-coding unit of the image.

In the extraction step S1202, identification information for identifying a mode is extracted from a coded bit data stream of the image. The mode defines one or more partition schemes, in each of which the intra-coding unit is uniformly partitioned into one or more transform units having a same size, and sizes of the transform units partitioned using different partition schemes are different.

As described in the image coding method according to the embodiment of the present disclosure, in the UTU structure, one or more partition schemes corresponding to different modes may be determined for the intra-coding unit. In each partition scheme, the intra-coding unit can be uniformly partitioned into transform units having a same size, and sizes of the transform units partitioned using different partition schemes are different. In CU-level protocol data, identification information utu_mode which is a syntax element is used for identifying the mode. One can refer to the description in corresponding positions in the above embodiment of the image coding method for the specific example of the identification information utu_mode, which is not repeated herein.

In the extraction step S1202, the identification information utu_mode is extracted from a coded bit data stream of the image according to predetermined CU-level protocol data. For example, in a case that the identification information utu_mode is located behind intra_mode in the CU-level syntax data, utu_mode is extracted after intra_mode.

Preferably, for an intra-coding unit having a size of 2Nx2N, with N being integral multiples of 8, the one or more partition schemes may include the following scheme 1 and/or scheme 2. According to the scheme 1, the intra-coding unit is directly used as the transform unit. According to the scheme 2, each transform unit is in a square shape and have a size greater than or equal to 4x4. One can refer to the description in corresponding positions in the above embodiment of the image coding method for the specific example of the partition scheme of the intra-coding unit having a size of 2Nx2N, which is not repeated herein.

Preferably, for an intra-coding unit which has a size of 8x8 and is not to be partitioned into prediction units, the one or more partition schemes may include the following scheme 1 and/or scheme 2. According to the scheme 1, the intra-coding unit is directly used as the transform unit. According to the scheme 2, each transform unit has a size equal to 4x4. One can refer to the description in corresponding positions in the above embodiment of the image coding method for the specific example of the partition scheme of the intra-coding unit which has a size of 8x8 and is not to be partitioned into prediction units, which is not repeated herein.

Preferably, for an intra-coding unit which has a size of 8x8 and is to be partitioned into 4 prediction units having a size of 4x4, the one or more partition schemes includes a scheme 1, according to which each transform unit has a size equal to 4x4. One can refer to the description in corresponding positions in the above embodiment of the image coding method for the specific example of the partition scheme of the intra-coding unit which has a size of 8x8 and is to be partitioned into 4 prediction units having a size of 4x4, which is not repeated herein.

Preferably, for an intra-coding unit which is rectangular and has a width of $2^m$ and a length of $2^n$, m>n, the one or more partition schemes may include the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above embodiment of the image coding method for the specific example of the partition scheme of the intra-coding unit which is rectangular and has a width of $2^m$ and a length of $2^n$, which is not repeated herein.

Preferably, for an intra-coding unit which is rectangular and has a width of $2^n$ and a length of $2^m$, m > n, the one or more partition schemes includes the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above embodiment of the image coding method for the specific example of the partition scheme of the intra-coding unit which is rectangular and has a width of $2^n$ and a length of $2^m$, which is not repeated herein.

Preferably, a luminance component and chrominance components of the image share the one or more partition schemes, or the luminance component and the chrominance components of the image use different ones of the one or more partition schemes. As a specific example, it is assumed that the identification information utu_mode for identifying the mode corresponding to the partition scheme is determined for the luminance component of the CU (that is, the UTU structure is determined), the chrominance component of the CU may share the UTU structure with the luminance component, or may use a separate UTU structure.

In the recovery step S1204, the one or more transform units are recovered from the coded bit data stream according to the mode identified by the identification information.

As a specific example, after the identification information utu_mode for identifying the mode is extracted, the transform units can be recovered from the coded bit data stream according to the mode identified by the identification information utu_mode. The intra CU having a size of 2Nx2N is taken as an example, and it is assumed that the following 4 partition schemes are defined: a mode 0 indicates that the CU is not partitioned, a mode 1 indicates that the CU is partitioned into 4 TUs having a size of NxN, a mode 2 indicates that the CU is partitioned into 16 TUs having a size of $1/2N \times 1/2N$, and a mode 3 indicates that the CU is partitioned into 64 TUs having a size of $1/4N \times 1/4N$. In the image decoding method, for the intra CU having the size of 2Nx2N, if the extracted utu_mode="00", 1 CU having a size of 2Nx2N can be recovered; if the extracted utu_mode="01", 4 TUs having a size of NxN can be recovered; if the extracted utu_mode="10", 16 TUs having a size of $1/2N \times 1/2N$ can be recovered; and if the extracted utu_mode="11", 64 TUs having a size of $1/4N \times 1/4N$ can be recovered.

In the decoding step S1206, image decoding is performed based on the one or more transform units.

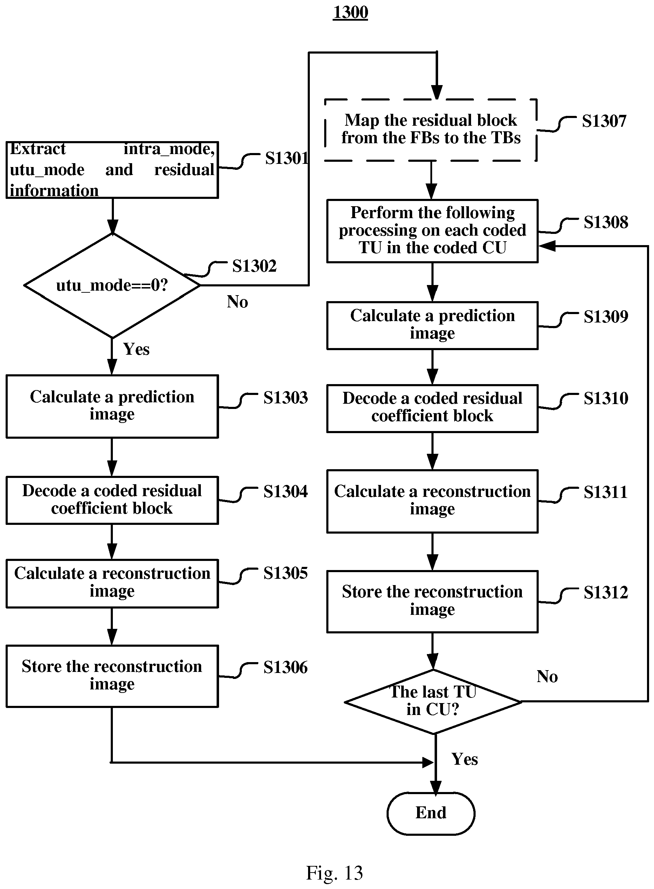

Figure 13 is a flow chart showing a decoding process performed on an intra-coding unit having a UTU structure according to an embodiment of the present disclosure.

In step S1301, intra_mode, utu_mode and residual information of the coded CU are extracted form a coded bit data stream of the image.

In step S1302, it is determined whether utu_mode equals to 0. If utu_mode equals to 0, which indicates that the CU is not partitioned, the process proceeds to step S1303.

In step S1303, a prediction image is calculated. That is, the prediction image of the CU is calculated using intra_mode extracted in step S1301.

In step S1304, the coded residual coefficient block is decoded. That is, inverse quantization, inverse transformation and the like are performed on the coded residual information extracted in step S1301 for decoding the coded residual coefficient block, thereby acquiring a decoded residual image.

In step S1305, a reconstruction image is calculated. That is, the reconstruction image of the coded CU is calculated based on the prediction image acquired by calculation in step S1303 and the residual image decoded in step S1304.

In step S1306, the reconstruction image is stored. That is, the reconstruction image of the CU acquired by calculation in step S1305 is stored for decoding of a next CU.

If it is determined in step S1302 that utu_mode is not equal to 0, that is, it is determined that the CU is partitioned into TUs, the process proceeds to step S1307.

In step S1307, the residual block is mapped from the FBs to the TBs. Mapping from the FBs to the TBs is described below. Step S1307 is not essential. Whether to perform step S1307 is controlled through a switch flag in a CU level or a higher level syntax element.

In step S1308, the processing from steps S1309 to S1312 is performed on each of coded TUs of the coded CU.

In step S1309, a prediction image is calculated. That is, the prediction image of the TU is calculated.

In step S1310, the coded residual coefficient block is decoded. That is, inverse quantization, inverse transformation and the like are performed on the coded residual information extracted in step S1301 for decoding the coded residual coefficient block, thereby acquiring a decoded residual image of the TU.

In step S1311, a reconstruction image is calculated. That is, the reconstruction image of the TU is calculated based on the prediction image acquired by calculation in step S1309 and the residual image decoded in step S1310.

In step S1312, the reconstruction image is stored. That is, the reconstruction image of the TU acquired by calculation in step S 1311 is stored for further decoding.

After all TUs are decoded, the process ends.

Corresponding to the image coding method according to the embodiment of the present disclosure, in step S1307, a method for mapping the FBs in the CU into the TBs is used.

A method for decoding includes: recovering a second coding block based on a received data stream, where the second coding block includes multiple frequency-domain blocks respectively corresponding to multiple frequency components, and the multiple frequency-domain blocks are arranged such that the frequency-domain block corresponding to a lower frequency component is scanned prior to the frequency-domain block corresponding to a higher frequency component; and recovering, based on the second coding block, a first coding block, which includes multiple transform blocks each of which includes multiple elements respectively corresponding to multiple frequency components, where an element corresponding to a specific frequency component in the multiple transform blocks of the first coding block is recovered based on the frequency block corresponding to the specific frequency component of the second coding block.

As a specific example, the second coding block may be the CB consisting of multiple FBs shown in the right side of Figure 10, the first coding block may be the CB consisting of multiple TBs shown in the left side of Figure 10. One can refer to the description in the image coding method according to the embodiment of the present disclosure for the detailed description of the first coding block and the second coding block, which is not repeated herein. In the decoding method, the second coding block is recovered from the received data stream, and then the element corresponding to a specific frequency component in the multiple transform blocks of the first coding block is recovered based on the frequency block corresponding to the specific frequency component of the second coding block. For example, referring to Figure 10, the element at the position where x=0 and y=0 which corresponds to the lowest frequency component in each of TB[0][0], TB[1][0], ..., TB[M-1][0], ..., TB[0][N-1], ..., and TB[M-1][N-1] is recovered based on the frequency domain block FB[0][0] corresponding to the lowest frequency component; and the element at the position where x=S-1 and y=S-1 which corresponds to the highest frequency component in each of TB[0][0], TB[1][0], ..., TB[M-1][0], ..., TB[0][N-1], ..., and TB[M-1][N-1] is recovered based on the frequency domain block FB[S-1][S-1] corresponding to the highest frequency component.

Preferably, the step of recovering the second coding block includes: filling successive elements of which values are zero to the end of the data stream, and recovering the second coding block based on the data stream acquired after the filling.

As described in the image coding method according to the embodiment of the present disclosure, when the CB is coded, a number of successive elements of which values are zero may exist at the end of the code stream acquired by scanning the FB in a certain scanning order. The successive elements of which values are zero at the end of the data code stream may be removed in order to reduce the code rate. In the image decoding method, successive elements of which values are zero may be filled to the end of the received data stream for recovering the second coding block, and the second coding block is recovered based on the data stream acquired after the filling.

Corresponding to the above embodiment of the image decoding method, the following image decoding apparatus is further provided according to the embodiment of the present disclosure.

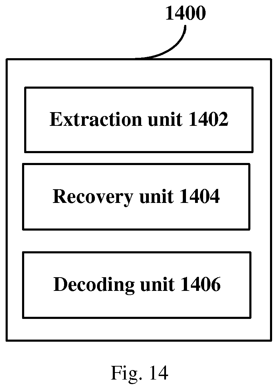

Figure 14 is a block diagram showing a functional configuration example of an image decoding apparatus 1400 according to an embodiment of the present disclosure.

As shown in Figure 14, the image decoding apparatus 1400 according to the embodiment of the present disclosure processes each intra-coding unit of an image, and may include an extraction unit 1402, a recovery unit 1404 and a decoding unit 1406. Next, functional configuration examples of the units are described.

The extraction unit 1402 is configured to extract identification information for identifying a mode from a coded bit data stream of the image. The mode defines one or more partition schemes, in each of which the intra-coding unit is uniformly partitioned into one or more transform units having a same size, and sizes of the transform units partitioned using different partition schemes are different.

As described in the image coding method according to the embodiment of the present disclosure, in the UTU structure, one or more partition schemes corresponding to different modes may be pre-determined for the intra-coding unit. In each partition scheme, the intra-coding unit can be uniformly partitioned into transform units having a same size, and sizes of the transform units partitioned using different partition schemes are different. In CU-level syntax data, identification information utu_mode which is a syntax element is used for identifying the mode.

The extraction unit 1402 is configured to extract the identification information utu_mode from a coded bit data stream of the image according to predetermined CU-level syntax data.

Preferably, for an intra-coding unit having a size of 2Nx2N, with N being integral multiples of 8, the one or more partition schemes may include the following scheme 1 and/or scheme 2. According to the scheme 1, the intra-coding unit is directly used as the transform unit. According to the scheme 2, each transform unit is in a square shape and have a size greater than or equal to 4x4. One can refer to the description in corresponding positions in the above embodiment of the image coding method for the specific example of the partition scheme of the intra-coding unit having a size of 2Nx2N, which is not repeated herein.

Preferably, for an intra-coding unit which has a size of 8x8 and is not to be partitioned into prediction units, the one or more partition schemes may include the following scheme 1 and/or scheme 2. According to the scheme 1, the intra-coding unit is directly used as the transform unit. According to the scheme 2, each transform unit has a size equal to 4x4. One can refer to the description in corresponding positions in the above embodiment of the image coding method for the specific example of the partition scheme of the intra-coding unit which has a size of 8x8 and is not to be partitioned into prediction units, which is not repeated herein.

Preferably, for an intra-coding unit which has a size of 8x8 and is to be partitioned into 4 prediction units having a size of 4x4, the one or more partition schemes includes a scheme 1, according to which each transform unit has a size equal to 4x4. One can refer to the description in corresponding positions in the above embodiment of the image coding method for the specific example of the partition scheme of the intra-coding unit which has a size of 8x8 and is to be partitioned into 4 prediction units having a size of 4x4, which is not repeated herein.

Preferably, for an intra-coding unit which is rectangular and has a width of $2^m$ and a length of $2^n$, m>n, the one or more partition schemes may include the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above embodiment of the image coding method for the specific example of the partition scheme of the intra-coding unit which is rectangular and has a width of $2^m$ and a length of $2^n$, which is not repeated herein.

Preferably, for an intra-coding unit which is rectangular and has a width of $2^n$ and a length of $2^m$, m > n, the one or more partition schemes includes the following scheme 1 and/or scheme 2. According to the scheme 1, the intra-coding unit is directly used as the transform unit. According to the scheme 2, each transform unit has a square shape and a size greater than or equal to 4x4. One can refer to the description in corresponding positions in the above embodiment of the image coding method for the specific examples of the partition scheme of the intra-coding unit which is rectangular and has a width of $2^n$ and a length of $2^m$, which is not repeated herein.

Preferably, a luminance component and chrominance components of the image share the one or more partition schemes, or the luminance component and the chrominance components of the image use different ones of the one or more partition schemes. As a specific example, it is assumed that the identification information utu_mode for identifying the mode corresponding to the partition scheme is determined for the luminance component of the CU (that is, the UTU structure is determined), the chrominance components of the CU may share the UTU structure with the luminance component, or may use a separate UTU structure.

The recovery unit 1404 is configured to recover the one or more transform units from the coded bit data stream according to the mode identified by the identification information.

As a specific example, after the identification information utu_mode for identifying the mode is extracted, the transform units can be recovered from the coded bit data stream according to the mode identified by the identification information utu_mode. One can refer to the description in corresponding positions in the above method embodiment for the specific example of recovering the transform units from the coded bit data stream, which is not repeated herein.

The decoding unit 1406 is configured to perform image decoding based on the one or more transform units.

In addition, an apparatus for decoding is further provided. The apparatus includes: a second coding block recovery unit configured to recover a second coding block according a received data stream, where the second coding block includes multiple frequency-domain blocks respectively corresponding to multiple frequency components, and the multiple frequency-domain blocks are arranged such that the frequency-domain block corresponding to a lower frequency component is scanned prior to the frequency-domain block corresponding to a higher frequency component; and a first coding block recovery unit configured to recover, based on the second coding block, a first coding block, which includes multiple transform blocks each of which includes multiple elements respectively corresponding to multiple frequency components, where an element corresponding to a specific frequency component in each transform block of the first coding block is recovered based on the frequency block of the second coding block corresponding to the specific frequency component.

Preferably, the second coding block recovery unit is further configured to fill successive elements of which values are zero to the end of the data stream, and recover the second coding block based on the data stream acquired after the filling.

One can refer to the description in corresponding positions in the above method embodiment for the specific example of recovering the second coding block and the first coding block, which is not repeated herein.

It should be noted that, functional configurations of the image coding apparatus 1100 and the image decoding apparatus 1400 according to the embodiments of the present disclosure are described by way of illustration and not by way of limitation, and those skilled in the art can modify the above embodiments according to the principle of the present disclosure, for example, functional modules in each of the embodiments can be added, deleted or combined, etc. and such modifications fall within the scope of the present disclosure.

In addition, it should be noted that, the apparatus embodiments herein correspond to the above method embodiments. Therefore, one can refer to the description in corresponding positions in the method embodiments for the content which is not described in the apparatus embodiments in detail, and the content is not repeated herein.

It is to be understood that, the machine executable instructions in the storage medium and the program production according to the embodiments of the present disclosure may further be configured to execute the above image coding method and the above image decoding method. Therefore, one can refer to the preceding description in corresponding positions for content which is not described in detail here, and the content is not repeated herein.

Correspondingly, the storage medium for carrying the above program production including the machine executable instructions is also included in the present disclosure. The storage medium includes but is not limited to floppy disc, optical disc, magneto-optical disk, memory card, memory stick, and the like.

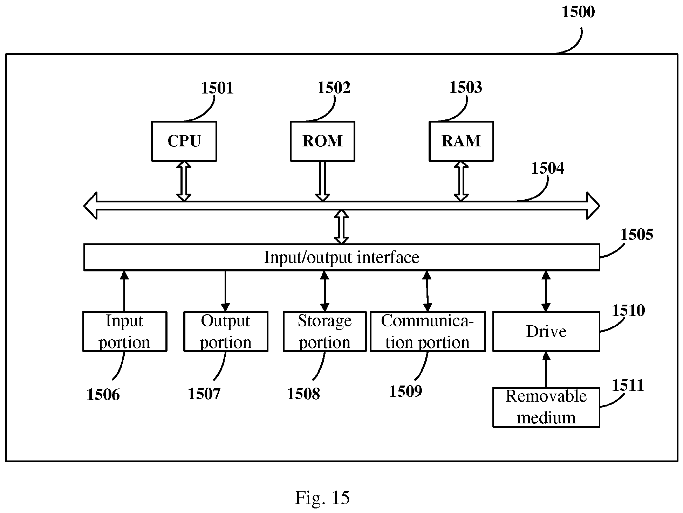

Furthermore, it shall be noted that the foregoing series of processes and apparatuses can also be embodied in software and/or firmware. In the case of being embodied in software and/or firmware, a program constituting the software is installed from a storage medium or a network to a computer with a dedicated hardware structure, e.g., a general purpose personal computer 1500 illustrated in Figure 15, which can perform various functions when various programs are installed thereon.

In Figure 15, a Central Processing Unit (CPU) 1501 performs various processes according to a program stored in a Read Only Memory (ROM) 1502 or loaded from a storage portion 1508 into a Random Access Memory (RAM) 1503 in which data required when the CPU 1501 performs the various processes is also stored as needed.

The CPU 1501, the ROM 1502 and the RAM 1503 are connected to each other via a bus 1504 to which an input/output interface 1505 is also connected.

The following components are connected to the input/output interface 1505: an input portion 1506 including a keyboard, a mouse, etc.; an output portion 1507 including a display, e.g., a Cathode Ray Tube (CRT), a Liquid Crystal Display (LCD), etc., a speaker, etc.; a storage portion 1508 including a hard disk, etc.; and a communication portion 1509 including a network interface card, e.g., an LAN card, a modem, etc. The communication portion 1509 performs a communication process over a network, e.g., the Internet.

A drive 1510 is also connected to the input/output interface 1505 as needed. A removable medium 1511, e.g., a magnetic disk, an optical disk, an magneto optical disk, a semiconductor memory, etc., can be installed on the drive 1510 as needed so that a computer program fetched therefrom can be installed into the storage portion 1508 as needed.

In the case that the foregoing series of processes are performed in software, a program constituting the software is installed from a network, e.g., the Internet, etc., or a storage medium, e.g., the removable medium 1511, etc.

Those skilled in the art shall appreciate that such a storage medium will not be limited to the removable medium 1511 illustrated in Figure 15 in which the program is stored and which is distributed separately from the apparatus to provide a user with the program. Examples of the removable medium 1511 include a magnetic disk (including a Floppy Disk (a registered trademark)), an optical disk (including Compact Disk-Read Only memory

(CD-ROM) and a Digital Versatile Disk (DVD)), a magneto optical disk (including a Mini Disk (MD) (a registered trademark)) and a semiconductor memory. Alternatively the storage medium can be the ROM 1502, a hard disk included in the storage portion 1508, etc., in which the program is stored and which is distributed together with the apparatus including the same to the user.

Preferred embodiments of the disclosure have been described above with reference to the drawings, but the disclosure is not limited to the above examples of course. Those skilled in the art may devise various alternations and modifications within the scope of the appended claims, and it should be understood that these alternations and modifications would naturally fall within the technical scope of the disclosure.

For example, multiple functions included in one unit in the above embodiments may be implemented by separated devices. Alternatively, multiple functions implemented by multiple units in the above embodiments may be implemented by separated devices respectively. Furthermore, one of the above functions may be implemented by multiple units. Without saying, such configuration is included in the technical scope of the disclosure.

In this specification, the steps described in the flow charts include not only processes performed in the sequential order as described chronically, but also processes performed concurrently or separately but not necessarily chronically. Further, even in the steps processed chronically, without saying, the order can be appropriately changed.

In addition, according to the technology according to the present disclosure, the following configuration can be performed.

Appendix 1. An image coding method, comprising:

performing the following processing on each intra-coding unit of an image:

determining identification information for identifying a mode, wherein the mode defines one or more partition schemes, in each of which the intra-coding unit is uniformly partitioned into one or more transform units having a same size, and sizes of the transform units partitioned using different partition schemes are different;

partitioning the intra-coding unit into the one or more transform units according to the mode identified by the identification information; and

coding the image based on the one or more transform units.

Appendix 2. The image coding method according to Appendix 1, wherein for an intra-coding unit having a size of 2Nx2N, with N being integral multiples of 8, the one or more partition schemes comprises:

a scheme 1, in which the intra-coding unit is directly used as the transform unit; and/or

a scheme 2, in which each transform unit has a square shape and a size greater than or equal to 4x4.

Appendix 3. The image coding method according to Appendix 1, wherein for an intra-coding unit which has a size of 8x8 and is not to be partitioned into prediction units, the one or more partition schemes comprises:

a scheme 1, in which the intra-coding unit is directly used as the transform unit; and/or

a scheme 2, in which each transform unit has a size equal to 4x4.

Appendix 4. The image coding method according to Appendix 1, wherein for an intra-coding unit which has a size of 8x8 and is to be partitioned into 4 prediction units having a size of 4x4, the one or more partition schemes comprises:

a scheme 1, in which each transform unit has a size equal to 4x4.

Appendix 5. The image coding method according to Appendix 1, wherein for an intra-coding unit which is rectangular and has a width of $2^m$ and a length of $2^n$, with m being greater than n, the one or more partition schemes comprises:

a scheme 1, in which the intra-coding unit is directly used as the transform unit; and/or

a scheme 2, in which each transform unit has a square shape and a size greater than or equal to 4x4.

Appendix 6. The image coding method according to Appendix 1, wherein for an intra-coding unit which is rectangular and has a width of $2^n$ and a length of $2^m$, with m being greater than n, the one or more partition schemes comprises:

a scheme 1, in which the intra-coding unit is directly used as the transform unit; and/or

a scheme 2: in which each transform unit has a square shape and a size greater than or equal to 4x4.

Appendix 7. The image coding method according to Appendix 1, wherein a luminance component and chrominance components of the image share the one or more partition schemes, or the luminance component and the chrominance components of the image use different ones of the one or more partition schemes.

Appendix 8. An image coding apparatus for processing each intra-coding unit of an image, comprising a determination unit configured to determine identification information for identifying a mode, wherein the mode defines one or more partition schemes, in each of which the intra-coding unit is uniformly partitioned into one or more transform units having a same size, and sizes of the transform units partitioned using different partition schemes are different; a partition unit configured to partition the intra-coding unit into the one or more transform units according to the mode identified by the identification information; and an coding unit configured to code the image based on the one or more transform units.

Appendix 9. The image coding apparatus according to Appendix 8, wherein for an intra-coding unit having a size of 2Nx2N, with N being integral multiples of 8, the one or more partition schemes comprises:

a scheme 1, in which the intra-coding unit is directly used as the transform unit; and/or

a scheme 2, in which each transform unit has a square shape and a size greater than or equal to 4x4.

Appendix 10. The image coding apparatus according to Appendix 8, wherein for an intra-coding unit which has a size of 8x8 and is not to be partitioned into prediction units, the one or more partition schemes comprises:

a scheme 1, in which the intra-coding unit is directly used as the transform unit; and/or

a scheme 2, in which each transform unit has a size equal to 4x4.

Appendix 11. The image coding apparatus according to Appendix 8, wherein for an intra-coding unit which has a size of 8x8 and is to be partitioned into 4 prediction units having a size of 4x4, the one or more partition schemes comprises:

a scheme 1, in which each transform unit has a size equal to 4x4.

Appendix 12. The image coding apparatus according to Appendix 8, wherein for an intra-coding unit which is rectangular and has a width of $2^m$ and a length of $2^n$, with m being greater than n, the one or more partition schemes comprises:

a scheme 1, in which the intra-coding unit is directly used as the transform unit; and/or

a scheme 2, in which each transform unit has a square shape and a size greater than or equal to 4x4.

Appendix 13. The image coding apparatus according to Appendix 8, wherein for an intra-coding unit which is rectangular and has a width of $2^n$ and a length of $2^m$, with m being greater than n, the one or more partition schemes comprises:

a scheme 1, in which the intra-coding unit is directly used as the transform unit; and/or

a scheme 2: in which each transform unit has a square shape and a size greater than or equal to 4x4.

Appendix 14. An image decoding method, comprising:

performing the following processing on each intra-coding unit of an image:

extracting, from an coded bit data stream of the image, identification information for identifying a mode, wherein the mode defines one or more partition schemes, in each of which the intra-coding unit is uniformly partitioned into one or more transform units having a same size, and sizes of the transform units partitioned using different partition schemes are different;

recovering the one or more transform units from the coded bit data stream according to the mode identified by the identification information; and

performing image decoding based on the one or more transform units.

Appendix 15. The image decoding method according to Appendix 14, wherein for an intra-coding unit having a size of 2Nx2N, with N being integral multiples of 8, the one or more partition schemes comprises:

a scheme 1, in which the intra-coding unit is directly used as the transform unit; and/or

a scheme 2, in which each transform unit has a square shape and a size greater than or equal to 4x4.

Appendix 16. The image decoding method according to Appendix 14, wherein for an intra-coding unit which has a size of 8x8 and is not to be partitioned into prediction units, the one or more partition schemes comprises:

a scheme 1, in which the intra-coding unit is directly used as the transform unit; and/or

a scheme 2, in which each transform unit has a size equal to 4x4.

Appendix 17. The image decoding method according to Appendix 14, wherein for an intra-coding unit which has a size of 8x8 and is to be partitioned into 4 prediction units having a size of 4x4, the one or more partition schemes comprises:

a scheme 1, in which each transform unit has a size equal to 4x4.

Appendix 18. The image decoding method according to Appendix 14, wherein for an intra-coding unit which is rectangular and has a width of $2^m$ and a length of $2^n$, with m being greater than n, the one or more partition schemes comprises:

a scheme 1, in which the intra-coding unit is directly used as the transform unit; and/or

a scheme 2, in which each transform unit has a square shape and a size greater than or equal to 4x4.

Appendix 19. The image decoding method according to Appendix 14, wherein for an intra-coding unit which is rectangular and has a width of $2^n$ and a length of $2^m$, with m being greater than n, the one or more partition schemes comprises:

a scheme 1, in which the intra-coding unit is directly used as the transform unit; and/or

a scheme 2: in which each transform unit has a square shape and a size greater than or equal to 4x4.

Appendix 20. The image decoding method according to Appendix 14, wherein a luminance component and chrominance components of the image share the one or more partition schemes, or the luminance component and the chrominance components of the image use different ones of the one or more partition schemes.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. An image coding method, comprising:

    performing the following processing on each intra-coding unit of an image:

        determining identification information for identifying a mode, wherein the mode defines one or more partition schemes, in each of which the intra-coding unit is uniformly partitioned into one or more transform units having a same size, and sizes of the transform units partitioned using different partition schemes are different;
        partitioning the intra-coding unit into the one or more transform units according to the mode identified by the identification information; and
        coding the image based on the one or more transform units.

2. The image coding method according to claim 1, wherein for an intra-coding unit having a size of 2Nx2N, with N being integral multiples of 8, the one or more partition schemes comprises:

        a scheme 1, in which the intra-coding unit is directly used as the transform unit; and/or
        a scheme 2, in which each transform unit has a square shape and a size greater than or equal to 4x4.

3. The image coding method according to claim 1, wherein for an intra-coding unit which has a size of 8x8 and is not to be partitioned into prediction units, the one or more partition schemes comprises:

        a scheme 1, in which the intra-coding unit is directly used as the transform unit; and/or
        a scheme 2, in which each transform unit has a size equal to 4x4.

4. The image coding method according to claim 1, wherein for an intra-coding unit which has a size of 8x8 and is to be partitioned into 4 prediction units having a size of 4x4, the one or more partition schemes comprises:

        a scheme 1, in which each transform unit has a size equal to 4x4.

5. The image coding method according to claim 1, wherein for an intra-coding unit which is rectangular and has a width of $2^m$ and a length of $2^n$, with m being greater than n, the one or more partition schemes comprises:

        a scheme 1, in which the intra-coding unit is directly used as the transform unit; and/or
        a scheme 2, in which each transform unit has a square shape and a size greater than or equal to 4x4.

6. The image coding method according to claim 1, wherein for an intra-coding unit which is rectangular and has a width of $2^n$ and a length of $2^m$, with m being greater than n, the one or more partition schemes comprises:

        a scheme 1, in which the intra-coding unit is directly used as the transform unit; and/or
        a scheme 2: in which each transform unit has a square shape and a size greater than or equal to 4x4.

7. The image coding method according to any of the preceding claims, wherein a luminance component and chrominance components of the image share the one or more partition schemes, or the luminance component and the chrominance components of the image use different ones of the one or more partition schemes.

8. An image coding apparatus for processing each intra-coding unit of an image, comprising
a determination unit configured to determine identification information for identifying a mode, wherein the mode defines one or more partition schemes, in each of which the intra-coding unit is uniformly partitioned into one or more transform units having a same size, and sizes of the transform units partitioned using different partition schemes are different; a partition unit configured to partition the intra-coding unit into the one or more transform units according to the mode identified by the identification information; and an coding unit configured to code the image based on the one or more transform units.

9. The image coding apparatus according to claim 8, wherein for an intra-coding unit having a size of 2Nx2N, with N being integral multiples of 8, the one or more partition schemes comprises:

a scheme 1, in which the intra-coding unit is directly used as the transform unit; and/or
a scheme 2, in which each transform unit has a square shape and a size greater than or equal to 4x4.

10. The image coding apparatus according to claim 8, wherein for an intra-coding unit which has a size of 8x8 and is not to be partitioned into prediction units, the one or more partition schemes comprises:

a scheme 1, in which the intra-coding unit is directly used as the transform unit; and/or
a scheme 2, in which each transform unit has a size equal to 4x4.

11. The image coding apparatus according to claim 8, wherein for an intra-coding unit which has a size of 8x8 and is to be partitioned into 4 prediction units having a size of 4x4, the one or more partition schemes comprises:

a scheme 1, in which each transform unit has a size equal to 4x4.

12. The image coding apparatus according to claim 8, wherein for an intra-coding unit which is rectangular and has a width of $2^m$ and a length of $2^n$, with m being greater than n, the one or more partition schemes comprises:

a scheme 1, in which the intra-coding unit is directly used as the transform unit; and/or
a scheme 2, in which each transform unit has a square shape and a size greater than or equal to 4x4.

13. The image coding apparatus according to claim 8, wherein for an intra-coding unit which is rectangular and has a width of $2^n$ and a length of $2^m$, with m being greater than n, the one or more partition schemes comprises:

a scheme 1, in which the intra-coding unit is directly used as the transform unit; and/or
a scheme 2: in which each transform unit has a square shape and a size greater than or equal to 4x4.

14. An image decoding method, comprising:

performing the following processing on each intra-coding unit of an image:

extracting, from an coded bit data stream of the image, identification information for identifying a mode, wherein the mode defines one or more partition schemes, in each of which the intra-coding unit is uniformly partitioned into one or more transform units having a same size, and sizes of the transform units partitioned using different partition schemes are different;
recovering the one or more transform units from the coded bit data stream according to the mode identified by the identification information; and
performing image decoding based on the one or more transform units.

15. The image decoding method according to claim 14, wherein for an intra-coding unit having a size of 2Nx2N, with N being integral multiples of 8, the one or more partition schemes comprises:

a scheme 1, in which the intra-coding unit is directly used as the transform unit; and/or
a scheme 2, in which each transform unit has a square shape and a size greater than or equal to 4x4.

CU

TU0 ······ TU15

Fig. 1

Fig. 2

Fig. 3

**400**

```
┌─────────────────────────────┐
│    Determine identification   │  S402
│  information for identifying a mode │
└─────────────────────────────┘
                │
                ▼
┌─────────────────────────────┐
│  Partitioning an intra-coding unit │  S404
│  into one or more transform units  │
│  according to the mode identified by │
│    the identification information   │
└─────────────────────────────┘
                │
                ▼
┌─────────────────────────────┐
│  Code an image based on the one or  │  S406
│      more transform units      │
└─────────────────────────────┘
```

Fig. 4

CU-level protocol data

| | utu_mode | | ... |
|---|---|---|---|

Fig. 5

Fig. 6

Fig. 7

Fig. 8

900

```
┌─────────────────────┐
│ Acquire best_intra_mode │─── S901
│ and best_utu_mode      │
└─────────────────────┘
          │
          ▼
┌─────────────────────┐
│ utu_mode=best_utu_mode │─── S902
│ intra_mode             │
│ =best_intra_mode       │
└─────────────────────┘
          │
          ▼
      ╱╲ S903
   ╱      ╲
  ╱ utu_mode==0? ╲──── No
   ╲      ╱
    ╲  ╱
     Yes
      │
      ▼
┌─────────────────────┐
│ Calculate a prediction │─── S904
│ image                  │
└─────────────────────┘
          │
          ▼
┌─────────────────────┐
│ Calculate a residual image │─── S905
└─────────────────────┘
          │
          ▼
┌─────────────────────┐
│ Code the residual image │─── S906
└─────────────────────┘
          │
          ▼
┌─────────────────────┐
│ Decode the coded residual │─── S907
│ coefficient block         │
└─────────────────────┘
          │
          ▼
┌─────────────────────┐
│ Calculate a reconstruction │─── S908
│ image                      │
└─────────────────────┘
          │
          ▼
┌─────────────────────┐
│ Store the reconstruction │─── S909
│ image, and output residual │
│ information               │
└─────────────────────┘
          │
          ▼
┌─────────────────────┐
│ Code intra_mode, utu_mode │─── S910
│ and the residual information │
│ into a bit stream          │
└─────────────────────┘
          │
          ▼
       ( End )
```

```
┌─────────────────────┐
│ Use each TU in the CU as a │─── S911
│ TU to be coded            │
└─────────────────────┘
          │
          ▼
┌─────────────────────┐
│ Calculate a prediction │─── S912
│ image                  │
└─────────────────────┘
          │
          ▼
┌─────────────────────┐
│ Calculate a residual image │─── S913
└─────────────────────┘
          │
          ▼
┌─────────────────────┐
│ Code the residual image │─── S914
└─────────────────────┘
          │
          ▼
┌─────────────────────┐
│ Decode the coded residual │─── S915
│ coefficient block         │
└─────────────────────┘
          │
          ▼
┌─────────────────────┐
│ Calculate a reconstruction │─── S916
│ image                      │
└─────────────────────┘
          │
          ▼
┌─────────────────────┐
│ Store the reconstruction │─── S917
│ image, and output residual │
│ information               │
└─────────────────────┘
          │
          ▼
       ╱╲
    ╱      ╲
   ╱ The last TU ╲──── No
   ╲ in  CU?   ╱
    ╲      ╱
     Yes
      │
      ▼
┌ ─ ─ ─ ─ ─ ─ ─ ─ ─ ┐
  Map the residual block  ─── S918
│ from the TUs to the FBs │
└ ─ ─ ─ ─ ─ ─ ─ ─ ─ ┘
```

Fig. 9

Fig. 10

**1100**

Determination unit 1102

Partition unit 1104

Coding unit 1106

Fig. 11

**1200**

Extract, from an coded bit data stream of the image, identification information for identifying a mode

**S1202**

Recover one or more transform units from the coded bit data stream according to the mode identified by the identification information

**S1204**

Perform image decoding based on the one or more transform units

**S1206**

Fig. 12

1300

Extract intra_mode, utu_mode and residual information — S1301

utu_mode==0? — S1302

No

Yes

Calculate a prediction image — S1303

Decode a coded residual coefficient block — S1304

Calculate a reconstruction image — S1305

Store the reconstruction image — S1306

Map the residual block from the FBs to the TBs — S1307

Perform the following processing on each coded TU in the coded CU — S1308

Calculate a prediction image — S1309

Decode a coded residual coefficient block — S1310

Calculate a reconstruction image — S1311

Store the reconstruction image — S1312

The last TU in CU?

No

Yes

End

Fig. 13

1400

Extraction unit 1402

Recovery unit 1404

Decoding unit 1406

Fig. 14

Fig. 15

Europäisches
Patentamt

European
Patent Office

Office européen
des brevets

## EUROPEAN SEARCH REPORT

**Application Number**

EP 18 16 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVIES (BBC) T: "Video coding technology proposal by BBC (and Samsung)", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A125, 16 April 2010 (2010-04-16), XP030007575, | 1-4, 8-11,14, 15 | INV. H04N19/119 H04N19/159 H04N19/176 |
| Y | * section 2.2.3 * <br> * section 2.2.4 * <br> * tables 2-1 * <br> * figures 2-2 * <br> * figures 2-6 * | 5-7,12, 13 | |
| Y | XU J ET AL: "Non-CE6: Improvements for SDIP", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G354, 9 November 2011 (2011-11-09), XP030110338, * section 2 * * section 2.2 first paragraph * | 5-7,12, 13 | |
| Y | JICHENG AN ET AL: "Block partitioning structure for next generation video coding", 113. MPEG MEETING; 19-10-2015 - 23-10-2015; GENEVA; (MOTION PICTURE EXPERT GROUP OR ISO/IEC JTC1/SC29/WG11),, no. m37524, 26 October 2015 (2015-10-26), XP030065891, * section 1 last two paragraphs * | 7 | |

**TECHNICAL FIELDS SEARCHED (IPC)**

H04N

The present search report has been drawn up for all claims

| Place of search | Date of completion of the search | Examiner |
|---|---|---|
| Munich | 4 May 2018 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)